# EUROPÄISCHE PATENTSCHRIFT

(11) **EP 1 835 144 B1**
(45) Veröffentlichungstag und Bekanntmachung des Hinweises auf die Patenterteilung: **02.06.2010**
(21) Anmeldenummer: 07103540.6
(22) Anmeldetag: 06.03.2007
(51) Int. Cl.: F02B 37/00, F02M 35/10, F16L 37/248

(54) **Anschluss für ein rohrförmiges Luftführungselement an einem Turbolader**
Connection for a tube-shaped air guide element to a turbo charger
Branchement pour élément d'arrivée d'air en forme de tuyau sur une turbocompresseur

(30) Priorität: 17.03.2006 DE 202006004407 U
(43) Veröffentlichungstag der Anmeldung: 19.09.2007
(73) Patentinhaber: MANN+HUMMEL GmbH, 71638 Ludwigsburg (DE)
(72) Erfinder: Regener, Guido, 38321, Klein Denkte (DE); Seseke, Markus, 37434, Wollershausen (DE)

(56) Entgegenhaltungen:
- EP-A- 1 213 472
- WO-A-02/02982
- DE-C1- 19 919 477
- GB-A- 785 310
- US-A- 2 377 740

## Beschreibung

### Technisches Gebiet

Die Erfindung betrifft eine Anordnung mit einem Anschluss zur Befestigung eines Luftführungselementes an einem Turbolader der im Oberbegriff des Anspruchs 1 angegebenen Gattung.

### Stand der Technik

Aus der EP 0 750 152 B1 ist eine Steckverbindung für den Anschluss von Rohr- und Schlauchleitungen bekannt, die insbesondere zur Verwendung für Rohrleitungssysteme von Kraftfahrzeugen vorgesehen ist. Diese besteht aus einer Innenhülse und einer Außenhülse, welche zwischen sich eine Rohrschlauchleitung aufnehmen, so dass ein Rohrstutzen über die Außenhülse geschoben werden kann, der mit Hilfe eines Sicherungsmittels mit der Außenhülse verrastbar ist. Dieses Sicherungsmittel besteht aus einem Drahtbügel. Dabei besitzt der Rohrstutzen an seinem Außenumfang mindestens eine radiale, in Längsrichtung verlaufende Ausbuchtung und der Rohrstutzen weist im Bereich der Ausbuchtung in Umfangsrichtung einen Durchbruch auf, durch welchen ein Teil des Drahtbügels hindurchgreift. Der Ausbuchtung ist eine an der Außenhülse befindliche Nase zugeordnet, mit der der Drahtbügel zusammenwirkt.

Die EP 1 213 472 B1 und die US 2,377,740 zeigen nur einseitig wirkende Bajonettverbindungen. Aus der WO 02/02982 A1 und der DE 199 19 477 C1 sind doppelseitig wirkende Bajonettverbindungen bekannt, wobei sich jedoch das eine zu verbindende Bauteil gegenüber dem anderen zu verbindenden Bauteil nicht verdrehen lässt. Schließlich zeigt die GB 785 310 A noch eine doppelseitig wirkende Bajonettverbindung zweier Rohre mit einem Bajonettring, ohne dass eine gegenseitige, bei der Montage wirkende Lagesicherung vorgesehen ist. Bei der Montage muss darauf geachtet werden, dass die beiden Rohre und der zwischenliegende Bajonettring in bestimmten Drehwinkellagen zueinander gehalten werden müssen.

### Offenbarung der Erfindung

Der vorliegenden Erfindung liegt die Aufgabe zugrunde, einen Anschluss für ein rohrförmiges Luftführungselement an einem Turbolader zu schaffen, der auf einfache Weise montierbar ist.

Diese Aufgabe wird durch einen Anschluss für ein rohrförmiges Luftführungselement an einem Turbolader mit den Merkmalen des Anspruchs 1 gelöst.

Der erfindungsgemäße Anschluss ist einfach aufgebaut und leicht zu montieren und außerdem ist die benötigte Aufstecklänge gering. Durch die relative Drehung der beiden zu verbindenden Teile ist lediglich eine geringe Montagekraft erforderlich, um eine hohe Vorspannkraft zu erreichen.

Die Bajonettverbindung ist durch Verschlussmittel gebildet, die über den Umfang des Rohrstutzens und des ersten Luftführungselementes verteilt mindestens zwei radiale Eingriffsmittel umfassen, die sich als Segmente über einen Bogenabschnitt des jeweiligen Umfangs erstrecken. Außerdem ist ein Bajonettring vorgesehen, der mittels einer ersten Bajonettverbindung an dem Rohrstutzen des Turboladers befestigt und mittels einer zweiten Bajonettverbindung mit dem Luftführungselement verbunden ist. Auf diese Weise ist es möglich, die Segmente für die Bajonettverbindung an dem Rohrstutzen und an dem Luftführungselement jeweils an der äußeren Umfangsfläche anzuordnen, was herstellungstechnisch günstiger ist. Zum einfachen Positionieren in einer definierten Lage sind an den Segmenten und/oder dem Bajonettring Anschlagelemente vorgesehen, die den Drehwinkel beim Montieren der Bajonettverbindung derart begrenzen, dass durch Verdrehen der aus Luftführungselement und Bajonettring gebildeten Anordnung die Segmente des Bajonettrings hinter die Segmente des Rohrstutzens bewegt werden.

Die jeweiligen Gegenstücke für die erste und die zweite Bajonettverbindung sind vorteilhaft jeweils am Innenumfang des Bajonettringes angeordnet. Dabei sind die Segmente am Rohrstutzen und Luftführungselement radial nach außen und die Segmente am Bajonettring radial nach innen gerichtet.

In weiterer Ausgestaltung des Erfindungsgegenstandes ist zwischen dem Rohrstutzen und dem Luftführungselement ein Dichtungsring angeordnet, der im montierten Zustand der Bajonettverbindung eine axiale Vorspannkraft ausübt. Damit wird nicht nur die Dichtungsfunktion erreicht, sondern die Bauteile werden auch spielfrei zueinander gehalten. Als zweckmäßig wird angesehen, dass der Dichtungsring zwischen einer sich konisch erweiternden Innenfläche des Rohrstutzens und einem einen zylindrischen Stutzen des Luftführungselementes begrenzenden radialen Bund eingespannt ist.

Das Luftführungselement ist vorzugsweise ein geblasenes Rohr aus Kunststoff, an dem die Verschlussmittel, d. h. die Segmente, direkt aus dem Rohr geformt sind. Der Bajonettring ist vorzugsweise ein hochfestes Spritzgussteil. Darüber hinaus ist es vorteilhaft, dass an dem Bajonettring und dem Luftführungselement Rastelemente zum Halten des Bajonettringes im montierten Zustand vorgesehen sind.

In weiterer Ausgestaltung kann am vorderen Ende des Rohres ein Führungselement, vorzugsweise in Form eines O-Ringes, angeordnet sein.

Auf diese Weise werden auch Vibrationen zwischen dem vorderen Rohrende und dem Rohrstutzen des Turboladers vermieden oder zumindest weitgehend gedämpft. Es wird darüber hinaus als zweckmäßig angesehen, dass sowohl die erste als auch die zweite Bajonettverbindung eine gleiche Anzahl von Paaren der die Bajonettverbindung bildenden Segmente aufweisen, wobei die Anordnung von drei oder vier Paaren von Segmenten als besonders geeignet angesehen wird.

Ausführungsbeispiele des erfindungsgemäßen Anschlusses sind nachstehend anhand der Zeichnung näher erläutert. In der Zeichnung zeigt:
- Fig. 1: einen Anschluss für ein rohrförmiges Luftführungselement in Explosionsdarstellung,
- Fig. 2: einen Schnitt durch ein Luftführungselement quer zur Längsachse mit Blick auf einen Bajonettring,
- Fig. 3: einen Schnitt entlang der Linie III-III in Fig. 2,
- Fig. 4: eine Darstellung gemäß Fig. 2 in der Lage des Bajonettrings, in der die Anschlussvorrichtung fertig montiert ist und
- Fig. 5: einen Schnitt entlang der Linie V-V in Fig. 4.

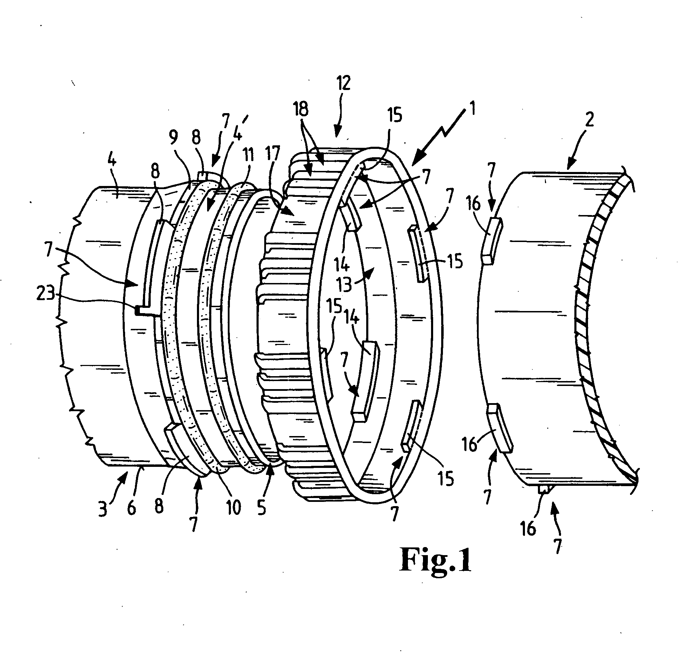

Die Fig. 1 zeigt einen Anschluss 1 mit einem an einem Gehäuse eines nicht dargestellten Turboladers angeordneten Rohrstutzen 2 sowie einem Luftführungselement 3. Das Luftführungselement 3 besteht im Ausführungsbeispiel der Fig. 1 aus einem Rohr 4, das aus Kunststoff besteht und vorzugsweise durch Blasformen hergestellt ist. An dem Rohr 4 sind in einem bestimmten Abstand zu seinem vorderen Ende 5 an der Mantelfläche 6 Verschlussmittel 7 vorgesehen, die im Ausführungsbeispiel als erste Segmente 8 sich über einen Bogenabschnitt des jeweiligen Umfangs erstrecken. Diese Segmente 8 sind somit radial nach außen stehende Eingriffsmittel, die mit zweiten Segmenten 14 an einer Innenwandung 13 eines Bajonettrings 12 zusammenwirken und eine Bajonettverbindung bilden.

Der Bajonettring 12 weist außerdem an seiner Innenwandung 13 dritte Segmente 15 auf, die ebenfalls radial nach innen ragen und dazu vorgesehen sind, mit vierten Segmenten 16 am vorderen Ende des Rohrstutzens 2 zusammenzuwirken. Alle Segmente 8, 14, 15, 16 bilden die Verschlussmittel 7, die zum Anschluss des Luftführungselementes 3 an den Rohrstutzen 2 vorgesehen sind. Wie aus der Darstellung des Bajonettringes 12 ersichtlich ist, sind die jeweiligen Anordnungen der zweiten Segmente 14 und der dritten Segmente 15 bezüglich des Umfangs gegeneinander versetzt, so dass eine gleichmäßigere Kraftverteilung im Bajonettring 12 erreicht ist.

In unmittelbarer Nähe der ersten Segmente 8 besitzt das Rohr 4 einen radialen Bund 9, an den sich ein zum vorderen Ende 5 erstreckender Abschnitt 4' mit reduziertem Durchmesser anschließt. Auf dem Abschnitt 4' ist ein Dichtungsring 10 in Form eines O-Ringes montiert, der an dem radialen Bund 9 anliegt. Dieser Dichtungsring 10 ist dazu vorgesehen, mit einer entsprechenden Fläche am Rohrstutzen 2 zusammenzuwirken. Am vorderen Ende 5 des Rohres 4 befindet sich ein weiterer O-Ring 11, der das Einführen des vorderen Endes 5 in den Rohrstutzen 2 erleichtert und außerdem zur Vibrationsdämpfung der montierten Teile dient.

Der Bajonettring 12 weist an seinem Außenumfang 17 in axialer Richtung verlaufende Rippen 18 auf, durch die der Grip bei der Montage des Bajonettringes, d. h. beim Herstellen der Bajonettverbindung, verbessert wird. Zum Erzeugen der Bajonettverbindung wird zunächst der Bajonettring 12 auf das Rohr 4 gesteckt, wobei die zweiten Segmente 14 eine Winkellage einnehmen, in der sie axial durch die Zwischenräume der ersten Segmente 8 auf die Mantelfläche 6 des Rohres 4 geschoben werden können. Durch Verdrehen des Bajonettringes 12 gegenüber dem Rohr 4 gelangen die zweiten Segmente 14 hinter die ersten Segmente 8, wobei der maximale Verdrehwinkel durch ein Anschlagelement 23 am ersten Segment 8 begrenzt ist. Sodann wird das vordere Ende 5 des Rohres 4 in den Rohrstutzen 2 eingeführt, und zwar so weit, bis die Dichtung 10 an einer entsprechenden Gegenfläche des Rohrstutzens 2 anliegt. Durch entsprechenden axialen Druck des Rohres 4 in Richtung auf den Rohrstutzen 2 und Verdrehen der aus Rohr 4 und Bajonettring 12 gebildeten Anordnung werden die dritten Segmente 15 hinter die vierten Segmente 16 bewegt, wobei aufgrund der Kontur der Segmente 15 und 16 während des Verdrehens ein axiales Spannen erfolgt.

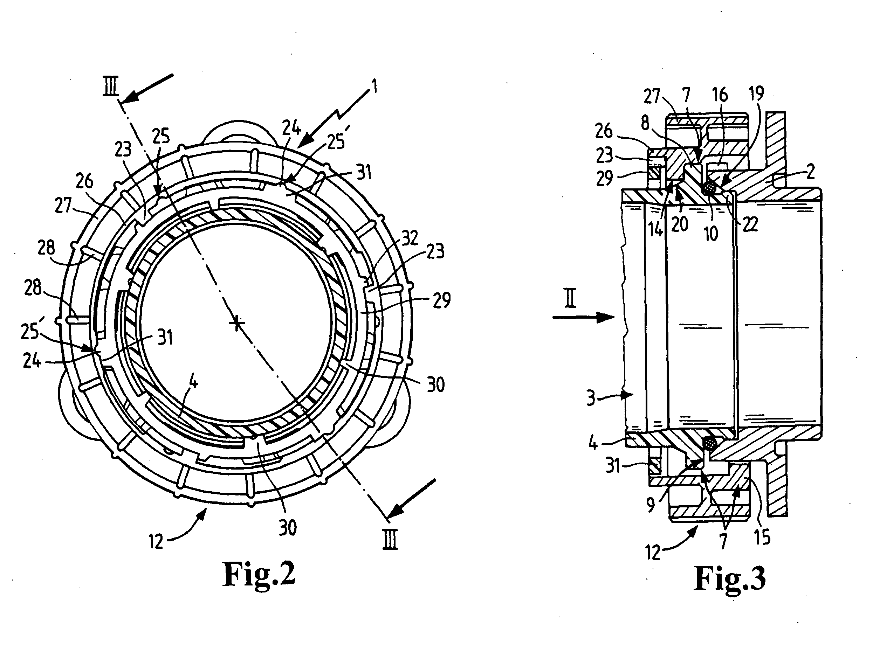

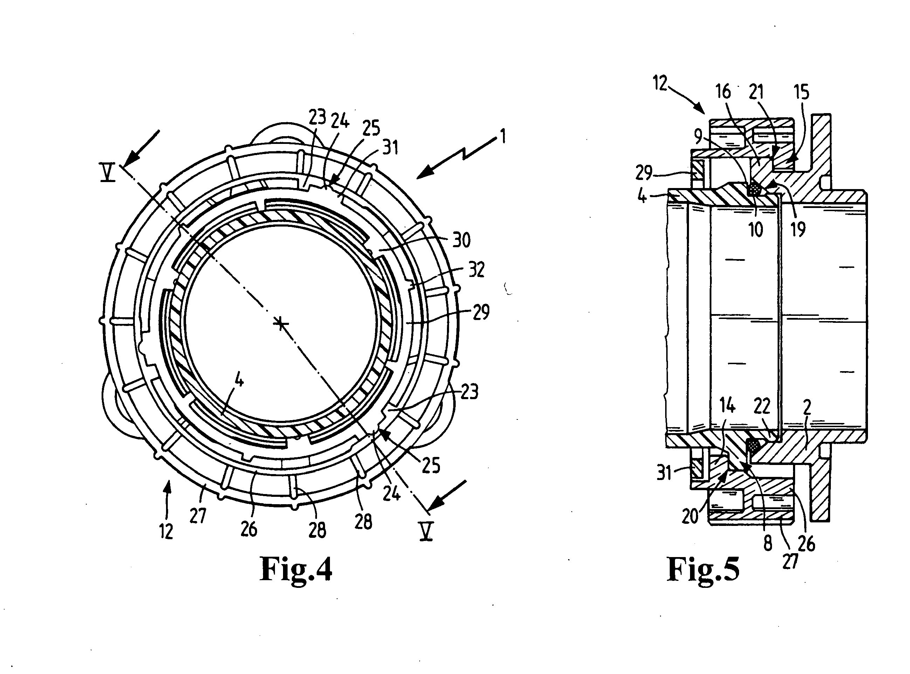

In Fig. 2 ist der Schnitt durch das Rohr 4 mit Blick auf den Bajonettring 12 dargestellt. Zwar sind in Fig. 2 die Formen an dem Bajonettring 12 etwas geändert, und es sind auch zusätzliche Elemente vorhanden; vom prinzipiellen Aufbau her ist die Anordnung jedoch mit derjenigen in Fig. 1 vergleichbar. An dem Rohr 4 ist ein konzentrischer Ring 29 angeformt, der über Stege 30 am Material des Rohres angebunden ist. Der konzentrische Ring 29 weist drei jeweils um 120° versetzt angeordnete radiale Vorsprünge 31 auf, an denen jeweils eine Rastnase 24 vorgesehen ist. Diese Rastnasen 24 greifen bei der Darstellung in Fig. 2 in Rastkerben 25' an einem Innenring 26 des Bajonettringes 12. Der Bajonettring 12 umfasst auch einen Außenring 27, der mit dem Innenring 26 über eine Vielzahl von Stegen 28 verbunden ist. An dem Innenring 26 sind drei radial nach innen gerichtete Anschlagelemente 23 vorgesehen, durch die der Verdrehwinkel, um den der Bajonettring 12 gegenüber dem Rohr 4 verdreht werden kann, begrenzt wird. In der Nähe des Anschlagelementes 23 ist eine weitere Rastkerbe 25 vorgesehen, in die die Rastnase 24 greift, wenn der Bajonettring 12 in die Lage gebracht worden ist, in der der Vorsprung 31 an dem Anschlagelement 23 anliegt, wie dies aus Fig. 4 ersichtlich ist.

Die Fig. 3 zeigt einen Schnitt entlang der Linie III-III in Fig. 2. Aus dieser Darstellung ist der Rohrstutzen 2 mit dem daran angeschlossenen Luftführungselement 3 und dem Bajonettring 12 ersichtlich. Das Luftführungselement 3 besteht aus dem vorzugsweise in Blastechnik hergestellten Rohr 4, an dem der konzentrische Ring 29 über Stege 30 angeformt ist. Im unteren Bereich der Fig. 3 ist an dem konzentrischen Ring 29 der Vorsprung 31 ersichtlich. Im oberen Bereich von Fig. 3 erkennt man das vom Innenring 26 radial nach innen ragende Anschlagelement 23. Der Innenring 26, der Außenring 27 und die die beiden Ringe miteinander verbindenden Stege 28 (vgl. Fig. 2) bilden den Bajonettring 12. An dem dem Rohr 4 zugewandten Ende besitzt der Bajonettring 12 radial nach innen gerichtete zweite Segmente 14, die erste radial nach außen gerichtete Segmente 8 an dem Rohr 4 hintergreifen. An dem dem Rohrstutzen 2 zugewandten Ende weist der Bajonettring 12 die radial nach innen gerichteten dritten Segmente 15 auf, die, wie die übrigen Segmente auch, die Verschlussmittel 7 bilden. An dem Außenumfang des Rohrstutzens 2 sind die vierten Segmente 16 angeordnet, die gemeinsam mit den dritten Segmenten 15 eine erste Bajonettverbindung 21 bilden.

Die ersten Segmente 8 und zweiten Segmente 14 bilden zusammen eine zweite Bajonettverbindung 20. Auf der dem Rohrstutzen 2 zugewandten Seite der ersten Segmente 8 ist ein radialer Bund 9 vorgesehen, vor dem sich ein zylindrischer Stutzen 22 befindet. Auf dem zylindrischen Stutzen 22 ist ein Dichtungsring 10 montiert, der an dem radialen Bund 9 anliegt. Der Rohrstutzen 2 weist eine sich konisch erweiternde Innenfläche 19 auf, gegen die der Dichtungsring 10 gespannt ist. Der Pfeil II entspricht der Ansicht, die die Fig. 2 zeigt.

Die Fig. 4 zeigt eine Darstellung ähnlich derjenigen in Fig. 2, jedoch ist in Fig. 4 der Bajonettring 12 gegenüber dem Rohr 4 sowie dessen konzentrischem Ring 29 verdreht. Es ist daraus ersichtlich, dass der Vorsprung 31 an dem Anschlagelement 23 liegt, und in dieser Position die Rastnase 24 in die Rastkerbe 25 greift. Durch das Ineinandergreifen der Rastnase 24 mit der Rastkerbe 25 wird der Bajonettring 12 in seiner Lage gegenüber dem Rohr 4 gesichert. Alle übrigen Bezugszeichen stimmen für gleiche Teile mit denjenigen der Fig. 2 überein, so dass auf die diesbezügliche Beschreibung verwiesen wird.

Die Fig. 5 zeigt einen Schnitt entlang der Linie V-V in Fig. 4. Aus dieser Darstellung ist ersichtlich, dass der Anschluss vollständig montiert ist, d. h. sowohl die erste Bajonettverbindung 20 als auch die zweite Bajonettverbindung 21 sind in der vollständig geschlossenen Position. Die Verschlussmittel 7 sind dabei einesteils durch die ersten Segmente 8 und zweiten Segmente 14 und zum anderen durch die dritten Segmente 15 und vierten Segmente 16 gebildet. Da der Segmentring 12 sowohl die ersten Segmente 8 als auch die vierten Segmente 16 überspannt und diese mit den zweiten Segmenten 14 und dritten Segmenten 15 hintergreift, wird das Rohr 4 unter Vorspannung des Dichtungsringes 10 an dem Rohrstutzen 2 gehalten. Im übrigen stimmen für gleiche Teile die Bezugszeichen in Fig. 5 mit denjenigen in Fig. 3 überein.

Während beim Ausführungsbeispiel der Fig. 1 über den Umfang verteilt jede der Bajonettverbindungen vier Paare von Segmenten umfasst, ist beim Ausführungsbeispiel der Fig. 2 bis 5 eine Anzahl von drei Segmentpaaren je Bajonettverbindung vorgesehen.

## Patentansprüche

1. Anordnung umfassend einen am Gehäuse eines Turboladers angeordneten Rohrstutzen (2), ein rohrförmiges Luftführungselement (3) sowie einen Anschluss (1), mittels dessen das rohrförmige Luftführungselement (3) am Rohrstutzen (2) des Turboladers dichtend befestigt ist, **dadurch gekennzeichnet, dass** der Rohrstutzen (2) und das Luftführungselement (3) nahe ihrer zu verbindenden Enden mit durch Ausformungen gebildeten Verschlussmitteln (7) versehen sind, die mindestens eine Bajonettverbindung (20, 21) bilden, wobei die die Bajonettverbindung bildenden Verschlussmittel (7) über den Umfang des Rohrstutzens (2) und des Luftführungselementes (3) verteilt mindestens zwei radiale Eingriffsmittel umfassen, die sich als Segmente (8, 14, 15, 16) über einen Bogenabschnitt des jeweiligen Umfangs erstrecken, wobei ein Bajonettring (12) vorgesehen ist, der mittels einer ersten Bajonettverbindung (21) an dem Rohrstutzen (2) des Turboladers befestigt und mittels einer zweiten Bajonettverbindung (20) mit dem Luftführungselement (3) verbunden ist, und wobei an den Segmenten (8) und/oder dem Bajonettring (12) Anschlagelemente (23) vorgesehen sind, die den Drehwinkel des Bajonettringes (12) gegenüber dem Luftführungselement (3) derart begrenzen, dass durch Verdrehen der aus Luftführungselement (3) und Bajonettring (12) gebildeten Anordnung die Segmente (15) des Bajonettrings (12) hinter die Segmente (16) des Rohrstutzens (2) bewegt werden.

2. Anordnung nach Anspruch 1, **dadurch gekennzeichnet, dass** an dem Luftführungselement (3) und dem Rohrstutzen (2) jeweils radial nach außen vorstehende Segmente (8, 16) vorgesehen und an dem Bajonettring (12) radial nach innen gerichtete Segmente (14, 15) angeordnet sind.

3. Anordnung nach Anspruch 1 oder 2, **dadurch gekennzeichnet, dass** zwischen dem Rohrstutzen (2) und dem Luftführungselement (3) ein Dichtungsring (10) angeordnet ist, der im montierten Zustand der Bajonettverbindung (20, 21) eine axiale Vorspannkraft ausübt.

4. Anordnung nach Anspruch 3, **dadurch gekennzeichnet, dass** der Dichtungsring (10) zwischen einer sich konisch erweiternden Innenfläche (19) des Rohrstutzens (2) und einem einen zylindrischen Stutzen (22) des Luftführungselementes (3) begrenzenden radialen Bund (9) eingespannt ist.

5. Anordnung nach einem der Ansprüche 1 bis 4, **dadurch gekennzeichnet, dass** das Luftführungselement (3) ein geblasenes Rohr (4) aus Kunststoff ist, an dem die Verschlussmittel (7) direkt aus dem Rohr (4) geformt sind.

6. Anordnung nach einem der Ansprüche 1 bis 5, **dadurch gekennzeichnet, dass** der Bajonettring (12) ein hochfestes Spritzgussteil ist.

7. Anordnung nach einem der Ansprüche 1 bis 6, **dadurch gekennzeichnet, dass** an dem Bajonettring (12) und dem Luftführungselement (3) Rastelemente (24, 25) zum Halten des Bajonettrings (12) im montierten Zustand vorgesehen sind.

8. Anordnung nach Anspruch 5, **dadurch gekennzeichnet, dass** am vorderen Ende (5) des Rohres (4) ein Führungselement (11) vorzugsweise in Form eines O-Ringes angeordnet ist.

9. Anordnung nach einem der Ansprüche 1 bis 8, **dadurch gekennzeichnet, dass** sowohl die erste als auch die zweite Bajonettverbindung (20, 21) vier Paare von Segmenten (8, 14, 15, 16) umfassen.

10. Anordnung nach einem der Ansprüche 1 bis 9, **dadurch gekennzeichnet, dass** sowohl die erste als auch die zweite Bajonettverbindung (20, 21) drei Paare von Segmenten (8, 14, 15, 16) umfassen.

## Claims

1. Arrangement comprising a connecting sleeve (2), a tubular air-guiding element (3) as well as a connection (1) by means of which the tubular air-guiding element (3) is sealingly attached to the connecting sleeve (2) of the turbocharger, **characterized in that** the connecting sleeve (2) and the air-guiding element (3) are provided close to their ends to be connected with closing means (7) formed by projections which form at least one bayonet connection (20, 21), the closing means (7) which are spread over the circumference of the connecting sleeve (2) and the air-guiding element (3) and form the bayonet connection comprising at least two radial engagement means which extend as segments (8, 14, 15, 16) over a curve section of the corresponding circumference, a bayonet ring being provided which is attached to the connecting sleeve (2) of the turbocharger by means of a first bayonet connection (21) and connected with the air-guiding element (3) by means of a second bayonet connection (20) and stop elements (23) being provided at the segments (8) and/or the bayonet ring (12) which define the rotational angle of the bayonet ring (12) in relation to the air-guiding element (3) in such a way that by rotating the arrangement formed by the air-guiding element (3) and the bayonet ring (12) the segments (15) of the bayonet ring (12) are moved behind the segments (16) of the connecting sleeve (2).

2. Arrangement according to claim 1, **characterized in that** radially outwardly projecting segments (6, 16) each are provided at the air-guiding element (3) and the connecting sleeve (2) and radially inwardly projecting segments (14, 15) at the bayonet ring (12).

3. Arrangement according to claim 1 or 2, **characterized in that** a sealing ring (10) is disposed between the connecting sleeve (2) and the air-guiding element (3) which exerts an axial prestressing force when the bayonet connection (20, 21) is mounted.

4. Arrangement according to claim 3, **characterized in that** the sealing ring (10) is clamped between a conically widened inner surface (19) of the connecting sleeve (2) and a radial collar (9) defining a cylindrical connecting piece (22) of the air-guiding element (3).

5. Arrangement according to one of the claims 1 to 4, **characterized in that** the air-guiding element (3) is a blow-molded pipe (4) made of plastic onto which the closing means (7) are directly molded from the pipe (4).

6. Arrangement according to one of the claims 1 to 5, **characterized in that** the bayonet ring (12) is a high-strength injection molded part

7. Arrangement according to one of the claims 1 to 6, **characterized in that** locking elements (24, 25) for supporting the bayonet ring (12) in mounted condition are provided at the bayonet ring (12) and at the air-guiding element (3).

8. Arrangement according to claim 5, **characterized in that** at the front end (5) of the pipe (4) a guide element (11), preferably shaped as an O-ring, is disposed.

9. Arrangement according to one of the claims 1 to 8, **characterized in that** the first as well as also the second bayonet connection (20, 21) comprise four pairs of segments (8, 14, 15, 16)

10. Arrangement according to one of the claims 1 to 9, **characterized in that** the first as well as also the second bayonet connection (20, 21) comprise three pairs of segments (8, 14, 15, 16)

## Revendications

1. Ensemble composé d'un raccord de tubulure (2) placée sur le boîtier d'un turbocompresseur, d'un élément de guidage d'air (3) en forme de tube et d'un raccord (1), au moyen duquel l'élément de guidage d'air (3) est fixé de manière étanche au raccord de tubulure (2) du turbocompresseur, **caractérisé en ce que** le raccord de tubulure (2) et l'élément de guidage d'air (3) sont pourvus, à proximité de leurs extrémités à relier, d'éléments de fermeture (7) constitués par des parties en saillie et formant au moins un raccord à baïonnette (20, 21), les éléments de fermeture (7) constituant le raccord à baïonnette comprenant au moins deux éléments de prise radiaux répartis sur le pourtour du raccord de tubulure (2) et de l'élément de guidage d'air (3) qui s'étendent en tant que segments (8, 14, 15, 16) sur une section courbée, un bague baïonnette (12) étant prévue qui est fixée au moyen d'un premier raccord à baïonnette (21) au raccord de tubulure (2) du turbocompresseur et est reliée au moyen d'un deuxième raccord à baïonnette (20) à l'élément de guidage d'air (3), et des éléments de butée (23) étant prévus sur les segments (8) et/ou la bague baïonnette (12), éléments lesquels limitent l'angle de rotation de la bague baïonnette (12) par rapport à l'élément de guidage d'air (3) de manière à ce que, en raison de la rotation de l'ensemble composé de l'élément de guidage d'air (3) et de la bague baïonnette (12), les segments (15) de la bague baïonnette (12) soient mus derrière les segments (16) du raccord de tubulure (2).

2. Ensemble selon la revendication 1, **caractérisé en ce que** des segments (6, 16) en saillie en sens radial vers l'extérieur sont prévus sur l'élément de guidage d'air (3) et le raccord de tubulure (2) et des segments (14, 15) dirigés en sens radial vers l'intérieur sont disposés sur la bague baïonnette (12).

3. Ensemble selon la revendication 1 ou 2, **caractérisé en ce qu'**une bague d'étanchéité (10) est disposée entre le raccord de tubulure (2) et l'élément de guidage d'air (3), laquelle exerce une force de prétension axiale lorsque l'assemblage à baïonnette (20, 21) est monté.

4. Ensemble selon la revendication 3, **caractérisé en ce que** la bague d'étanchéité (10) est insérée entre une surface intérieure (19) s'élargissant de façon conique du raccord de tubulure (2) et un collet radial (9) limitant un raccord cylindrique (22) de l'élément de guidage d'air (3).

5. Ensemble selon l'une des revendications 1 à 3, **caractérisé en ce que** l'élément de guidage d'air (3) est un tube soufflé (4) en matière plastique sur lequel les éléments de fermeture (7) sont formés directement à partir du tube (4).

6. Ensemble selon l'une des revendications 1 à 5, **caractérisé en ce que** la bague baïonnette (12) est une pièce moulée par injection très solide.

7. Ensemble selon l'une des revendications 1 à 6, **caractérisé en ce que** des éléments d'enclenchement (24, 25) servant à maintenir la bague baïonnette (12) en position montée sont prévus sur la bague baïonnette (12) et l'élément de guidage d'air (3).

8. Ensemble selon la revendications 5, **caractérisé en ce qu'**un élément de guidage (11), de préférence en forme de joint torique, est disposé sur l'extrémité avant (5) du tube (4).

9. Ensemble selon l'une des revendications 1 à 8, **caractérisé en ce qu'**aussi bien le premier que le deuxième raccord à baïonnette (20, 21) comprennent quatre paires de segments (8, 14, 15, 16).

10. Ensemble selon l'une des revendications 1 à 9, **caractérisé en ce qu'**aussi bien le premier que le deuxième raccord à baïonnette (20, 21) comprennent trois paires de segments (8, 14, 15, 16).
